# EUROPEAN PATENT APPLICATION

(11) **EP 2 395 690 A1**
(43) Date of publication of application: **14.12.2011**
(21) Application number: 10165739.3
(22) Date of filing: 11.06.2010
(51) Int. Cl.: H04J 14/02

(54) **Method for operating an optical transmission line, optical transmission system, optical transmitter, set of optical filters, and optical filter device**

(71) Applicant: Alcatel Lucent, 75007 Paris (FR)
(72) Inventor: Poehlmann, Wolfgang, 71282 Hemmingen (DE)
(74) Representative: Brose, Gerhard

(57) **Abstract**

The invention relates to a method for operating an optical transmission line with several transmission channels for communication of several optical transmitters with several optical receivers using different wavelengths (lambdal to lambda20), where to each optical receiver an optical transmission channel is assigned, wherein to each transmission channel a set of different wavelengths (lambda1, lambda5, lambda9 ...; lambda2, lambda6, lambda10 ...; ...) is assigned, wherein each wavelength is assigned to one set of different wavelength only, wherein the wavelengths of each set of wavelengths are spread over an area of wavelength (lambda1 to lambda20) commonly permitted to all sets of wavelengths, wherein to each optical receiver is assigned a set of optical filters that pass the wavelengths of one set of wavelengths, and wherein each optical transmitter chooses a wavelength from the set ot wavelengths assigned to it that is usable for it with small effort, as well as to an optical transmission system, an optical transmitter, a set of optical filters, and an optical filter device.

## Description

### Field of the Invention

The invention relates to a method for operating an optical transmission line with several transmission channels for communication of several optical transmitters with several optical receivers using different wavelengths, where to each optical receiver an optical transmission channel is assigned.

The invention further relates to an optical transmission system with an optical transmission line with several transmission channels for communication of several optical transmitters with several optical receivers using different wavelengths, where to each optical receiver an optical transmission channel is assigned.

The invention further relates to an optical transmitter for an optical transmission system with an optical transmission line with several transmission channels for communication of several optical transmitters with several optical receivers using different wavelengths, where to each optical receiver an optical transmission channel is assigned.

The invention further relates to a set of optical filters for passing one wavelength each out of a set of different wavelengths.

The invention further relates to an optical filter device with at least two sets of optical filters for passing one wavelength each out of a set of different wavelengths, the sets complementing one another such that they as a whole cover the area of wavelength commonly permitted to all sets of wavelengths.

### Background

The problem dealt with here arose in the field of passive optical networks, PONs. Similar problems could arise in other fields of telecommunication, where a common optical transmission line with several transmission channels is used for communication of several optical transmitters with several optical receivers using different wavelengths, where to each optical receiver an optical transmission channel is assigned.

The solution found here could be used in such similar fields, too. Problem and will be described mainly with respect to passive optical networks.

Passive optical networks, or PONs, are being used in the access area of telecommunications' networks for connecting up to some hundreds of subscribers via optical transmission lines to an operator's central office. Such network normally is tree-shaped with the trunk connecting to the central office and the branches connecting to the subscribers.

Instead of several single subscribers also equivalents of respective higher traffic equipment may be connected.

Despite of being called "passive" such network also may contain active elements like regenerators or repeaters. Those elements than may act as optical transmitters or optical receivers in the sense of this invention.

We consider here mainly the upstream traffic from the subscribers to the central office, but in the opposite direction the principle of the invention could be applied as well,

At least between the central office and the first branching point there is the whole traffic present on one and the same part of an optical transmission line.

We assume to have a wavelength division multiplex system with several transmission channels on the same transmission line. The channels are foreseen for using different wavelengths. Depending on the actual traffic from one up to the maximum of channels will be in operation. Each channel may carry a time division multiplex of traffic from or for the different subscribers or equivalent equipment.

Each optical transmitter for operating in a wavelength division multiplex mode does not only consume for outputting optical light while transmitting, but also needs to be empowered to reach and hold its operating wavelength. The latter is necessary not only while actually transmitting, but during the whole time while being ready for operation. So the power needed for holding the operating parameters may by far exceed the power for emitting light. In times of green technology this is a major drawback.

It is an object to reduce such additional power needs.

### Summary

This object according to the invention is solved by a method for operating an optical transmission line with several transmission channels for communication of several optical transmitters with several optical receivers using different wavelengths, where to each optical receiver an optical transmission channel is assigned, wherein to each transmission channel a set of different wavelengths is assigned, wherein each wavelength is assigned to one set of different wavelength only, wherein the wavelengths of each set of wavelengths are spread over an area of wavelength commonly permitted to all sets of wavelengths, wherein to each optical receiver is assigned a set of optical filters that pass the wavelengths of one set of wavelengths, and wherein each optical transmitter chooses a wavelength from the set of wavelengths assigned to it that is usable for it with small effort.

This object according to the invention further is solved by an optical transmission system with an optical transmission line with several transmission channels for communication of several optical transmitters with several optical receivers using different wavelengths, where to each optical receiver an optical transmission channel is assigned, wherein to each optical receiver a set of optical filters is assigned, wherein each filter passes one wavelength out of a set of different wavelengths, wherein each set of optical filters includes filters for other wavelengths than the other sets of optical filters, wherein the sets of filters are arranged such that the wavelengths of each set of wavelengths are spread over an area of wavelength commonly permitted to all sets of wavelengths, and wherein each optical transmitter is built such that it chooses a wavelength from the set of wavelengths assigned to it that is usable for it with small effort.

This object according to the invention further is solved by an optical transmitter for an optical transmission system with an optical transmission line with several transmission channels for communication of several optical transmitters with several optical receivers using different wavelengths, where to each optical receiver an optical transmission channel is assigned, wherein the optical transmitter is built such that it chooses a wavelength from the set of wavelengths assigned to it that is usable for it with small effort.

This object according to the invention further is solved by a set of optical filters for passing one wavelength each out of a set of different wavelengths, that is built such that when combined with at least one further set of optical filters for passing one wavelength each out of a set of different wavelengths each set of wavelengths is spread over an area of wavelength commonly permitted to all sets of wavelengths.

This object according to the invention further is solved by an optical filter device with at least two sets of optical filters for passing one wavelength each out of a set of different wavelengths, with each set of optical filters being built such that when combined with at least one further set of optical filters for passing one wavelength each out of a set of different wavelengths each set of wavelengths is spread over an area of wavelength commonly permitted to all sets of wavelengths, that complement one another such that they as a whole cover the area of wavelength commonly permitted to all sets of wavelengths, wherein for each set of optical filters an optical combining unit is present, that bundles all wavelengths having passed all filters of this set of optical filters.

The invention thus allows to operate each wavelength channel with one of a whole set of wavelengths assigned to the same channel, but being distributed over the whole area of allowed or usable wavelengths. Then each optical transmitter may choose either of such assigned wavelengths taking into account the energy effort it needs to reach and hold its operating wavelength. Sets of optical filters then are used to filter out all wavelengths assigned to one and the same channel and to feed them to the respective optical receiver.

Practically this means that the optical transmitters in principle are allowed to operate with floating wavelengths depending on their temperature. But in floating they have to skip wavelengths for the other ones. So the use of conventional DFB lasers (DFB = Distributed FeedBack) instead of DWDM lasers (DWDM = Dense Wavelength Division Multiplex) or CWDM lasers (CWDM = Course Wavelength Division Multiplex) as a low-cost solution is possible. In addition such solution needs only little energy to reach and hold their assigned wavelengths.

It should be clear that the term "wavelength" here, as often, is used meaning a small band of wavelengths around a center wavelength.

Likewise it should be clear that the term "filter" here means any optical element that acts on one "wavelength" in a manner different from the acting on all other wavelengths. In practice this could be a mirror-like element like a dichroic mirror that is placed diagonal to the optical path and reflects one wavelength by 90 degrees while it does not influence the others. Also elements building a well-known arrayed waveguide grating (AWG) are considered to represent such "filters".

Further embodiments of the invention are to be found in the subclaims and in the accompanying description.

### Brief Description of the Figures

In the following the invention now will be described by way of example with the aid of the accompanying drawings, in which:
Figure 1 shows an optical transmission system according to the invention, wherein a method for operating an optical transmission line according to the invention can be performed, an optical transmitter according to the invention, and an optical filter device according to the invention including four sets of optical filters according to the invention.
Figure 2 shows an optical filter device according to the invention including four sets of optical filters according to the invention.
Figure 3 shows optical spectra occurring in an optical filter device according to the invention.
Figure 4 shows an optical transmitter according to the invention.

### Description of the Embodiments

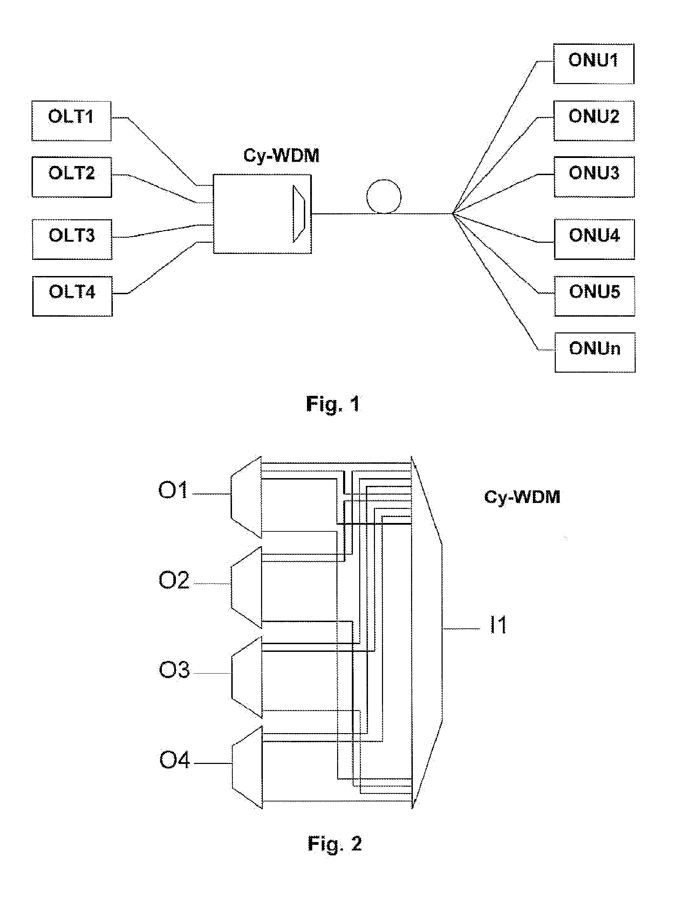

The optical transmission system shown in figure 1 shows a passive optical network in the access area of a telecommunications area. On the left there is shown equipment belonging to a central office of an operator, namely four optical line termination units OLT1, OLT2, OLT3, and OLT4, and a cyclic wavelength division multiplexer Cy-WDM. On the right there is shown equipment belonging to the subscribers' premises, namely six out of a greater number of optical network units ONU1, ..., ONU5, and ONUn.

Of the four optical line termination units OLT1, OLT2, OLT3, and OLT4 here we consider the receive parts. We assume that the number of four such units shows the complete network installation. But from up to two such units measures like those recommended by this invention are demanded; of course with only one such unit such measures are not hindering. In addition, independent from the number of installed such units the number of units in operation may reach from one to the maximum, here four. There is no difference between known such units and those suitable for the invention. They are assumed to have optical inputs that are equally sensitive to all wavelengths within a given operating range.

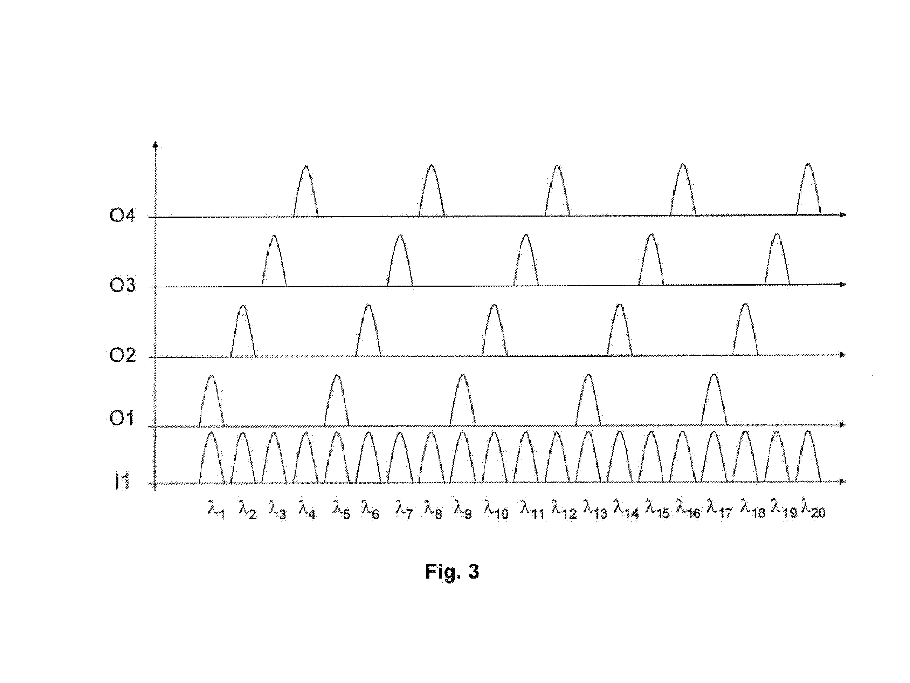

The cyclic wavelength division multiplexer Cy-WDM is a key element of this invention and will be described separately with the aid of figures 2 and 3.

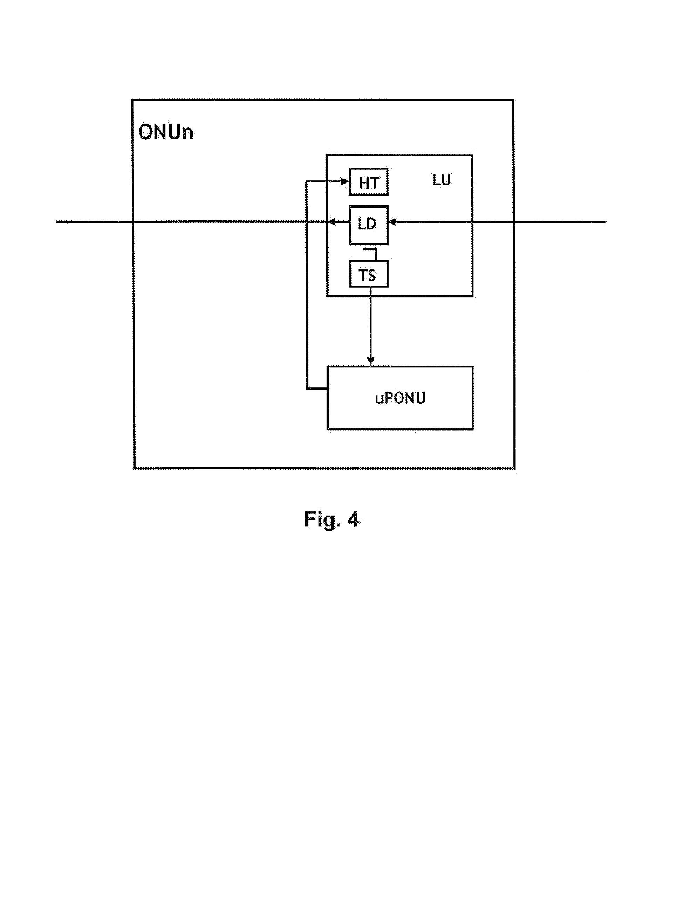

Of the optical network units like ONU1, ..., ONU5, and ONUn here we consider the transmit parts. As already mentioned they may be equipped with conventional DFB lasers and may float with temperature, but in their floating have to skip wavelengths for the other ones. This will be described below with reference to figure 4.

Figure 2 shows an optical filter device Cy-WDM according to the invention. In this example this filter device is adapted to four transmission channels being output at four outputs 01, 02, 03, and 04, each belonging to one of four optical receivers.

At the right there is an input I1 connected to an input of an optical wavelength demultiplexer. This demultiplexer filters out each of the allowed wavelengths separately. All of these allowed wavelengths are separated into four sets of wavelengths with each wavelength belonging to one set of wavelengths and the wavelengths of each set of wavelengths being spread over the whole foreseen area of wavelengths.

In practice the wavelengths are cyclically assigned to the four transmission channels, meaning that all wavelengths belonging to one channel are equally spaced from one another.

The outputs of this wavelength demultiplexer now are cyclically connected to the inputs of four combining units shown at the left of figure 2. Principally these combining units are optical couplers. But depending on the technology used such couplers may have high losses. In practice therefore the use of optical filter devices with a 1XN or here 1X4 matrix may be preferred as such optical combining units.

In practice the whole optical filter device Cy-WDM shown in figure 2 may be realized in one single component based on the principles of the already mentioned well-known arrayed waveguide gratings AWG. Such component in fact has (in both directions!) an insertion loss lower than that of a splitter.

The latter fact allows the replacement of the element at the branching point of figure 1, normally a splitter, with an optical filter device Cy-WDM according to this invention. The freedom of freely changing the assignment between the optical network units like ONU1, ..., ONU5, and ONUn thus would be exchanged against a lower insertion loss.

This is shown in terms of wavelengths in figure 3. This example shows 20 wavelengths (or wavelength bands) from lambdal to lambda20 being input to the optical filter device at input I1. They are cyclically allotted to the four transmission channels being output at one each of the four outputs 01, 02, 03, and 04.

So each of the optical network units ONU1, ..., ONU5, and ONUn depending on the actual traffic situation is assigned to either of these four transmission channels being output on the respective one on outputs 01, 02, 03, and O4 of the optical filter device Cy-WDM. The transmit parts of these optical network units ONU1, ..., ONU5, and ONUn are allowed to be low-cost conventional DFB lasers that are allowed to float with temperature. According to what is shown in figure 3 such floating is not really free, but such that a lock-in at either of the wavelengths assigned to the respective transmission channels is to be ensured. Such restriction is not really severe, because the shown number of 20 possible channels is only a simplification for better illustration. Actually it is expected to have up to some 50 allowed transmission channels. And even when the restriction in freedom were severe, it would be better than to have no freedom at all.

An example of an optical transmitter according to the invention is shown in figure 4.

Figure 4 shows an optical network unit ONUn including a laser unit LU and a controller uPONU.

The laser unit LU in turn includes a laser diode LD, a temperature sensor TS, and a heater HT.

Data representing the temperature sensed by the temperature sensor TS is reported to the controller uPONU, whereas the heater is in controlled by the controller uPONU.

As the operating wavelength of the laser diode LD is directly depending from the laser temperature and such dependency can be deposed within the controller uPONU, it is no problem to set the operating wavelength of the laser diode LD to hit the next allowed transmission channel by slightly increasing or decreasing the heating of the heater HT. Of course decreasing the heating is preferred.

Instead of or in addition to the heater HT of course a cooling element like a Peltier element could be used.

Apart from the temperature also the bias current of the laser diode LD is determining the operating wavelength of the laser diode LD. This, of course, can be considered in a similar way by the controller uPONU.

As figure 4 only shows the transmit part of an optical network unit like optical network units ONU1, ..., ONU5, and ONUn, it is not shown here, how the allowed transmission channels are reported to the controller uPONU. But this is not a problem in developing such network unit.

## Claims

1. Method for operating an optical transmission line with several transmission channels (O1, O2, O3, O4) for communication of several optical transmitters (ONU1, ..., ONU5, ONUn) with several optical receivers (OLT1, OLT2, OLT3, OLT4) using different wavelengths (lambda1 to lambda20), where to each optical receiver (OLT1, OLT2, OLT3, OLT4) an optical transmission channel (O1, O2, O3, O4) is assigned, **wherein** to each transmission channel (O1, O2, O3, 04) a set of different wavelengths (lambda1, lambda5, lambda9 ...; lambda2, lambda6, lambda10 ...; ...) is assigned, wherein each wavelength is assigned to one set of different wavelength only, wherein the wavelengths of each set of wavelengths are spread over an area of wavelength (lambda1 to lambda20) commonly permitted to all sets of wavelengths, wherein to each optical receiver (OLT1, OLT2, OLT3, OLT4) is assigned a set of optical fil ters that pass the wavelengths of one set of wavelengths, and wherein each optical transmitter (ONU1, ..., ONU5, ONUn) chooses a wavelength from the set of wavelengths assigned to it that is usable for it with small effort.

2. Method according to claim 1, **characterized in, that** a transmission channel is assigned to several optical transmitters (ONU1, ..., ONU5, ONUn) to use such transmission mode in a time multiplex manner.

3. Optical transmission system (figure 1) with an optical transmission line with several transmission channels (01, 02, 03, 04) for communication of several optical transmitters (ONU1, ..., ONU5, ONUn) with several optical receivers (OLT1, OLT2, OLT3, OLT4) using different wavelengths (lambda1 to lambda20), where to each optical receiver (OLT1, OLT2, OLT3, OLT4) an optical transmission channel (O1, O2, O3, O4) is assigned, **wherein** to each optical receiver (OLT1, OLT2, OLT3, OLT4) a set of optical filters is assigned, wherein each filter passes one wavelength out of a set of different wavelengths (lambda1, lambda5, lambda9 ...; lambda2, lambda6, lambda10 ...; ...), wherein each set of optical filters includes filters for other wavelengths than the other sets of optical filters, wherein the sets of filters are arranged such that the wavelengths of each set of wavelengths are spread over an area of wavelength (lambda1 to lambda20) commonly permitted to all sets of wavelengths, and wherein each optical transmitter (ONU1, ..., ONU5, ONUn) is built such that it chooses a wavelength from the set of wavelengths assigned to it that is usable for it with small effort.

4. Optical transmission system according to claim 3, **characterized in**, chat the optical transmission line is part of an optical access network.

5. Optical transmitter (ONU1, ..., ONU5, ONUn) for an optical transmission system (figure 1) with an optical transmission line with several transmission channels (O1, O2, O3, O4) for communication of several optical transmitters (ONU1, ..., ONU5, ONUn) with several optical receivers (OLT1, OLT2, OLT3, OLT4) using different wavelengths (lambdal to lambda20), where to each optical receiver (OLT1, OLT2, OLT3, OLT4) an optical transmission channel (O1, O2, O3, O4) is assigned, **wherein** the optical transmitter (ONU1, ..., ONU5, ONUn) is built such that it chooses a wavelength from a set of wavelengths (lambda1, lambda5, lambda9 ...; lambda2, lambda6, lambda10 ...; ...) assigned to it that is usable for it with small effort.

6. Set of optical filters for passing one wavelength each out of a set of different wavelengths, that is built such that when combined with at least one further set of optical filters for passing one wavelength each out of a set of different, wavelengths each set of wavelengths (lambda1, lambda5, lambda9 ...; lambda2, lambda6, lambda10 ...; ...) is spread over an area of wavelength (lambda1 to lambda20) commonly permitted to all sets of wavelengths.

7. Set of optical filters according to claim 6, **characterized in, that** the passband wavelengths of the individual filters of this set are spaced equally among one another.

8. Optical filter device (Cy-WDM) with at least two sets of optical filters according to claim 6, that complement one another such that they as a whole cover the area of wavelength (lambda1 to lambda20) commonly permitted to all sets of wavelengths, **wherein** for each set of optical filters an optical combining unit is present, that bundles all wavelengths having passed all filters of this set of optical filters.

9. Optical filter device according to claim 8, **characterized in, that** each optical combining unit is an optical coupler.

10. Optical filter device according to claim 8, **characterized in, that** each optical combining unit is a set of optical filters.

## Amended claims

### Amended claims in accordance with Rule 137(2) EPC.

**1.** Method for operating an optical transmission line with several transmission channels (O1, O2, O3, O4) for communication of several optical transmitters (ONU1, ..., ONU5, ONUn) with several optical receivers (OLT1, OLT2, OLT3, OLT4) using different wavelengths (lambda1 to lambda20), where each wavelength is assigned to one set of different wavelength only, where the wavelengths of each set of wavelengths are spread over an area of wavelength (lambda1 to lambda20) commonly permitted to all sets of wavelengths, and where to each optical receiver (OLT1, OLT2, OLT3, OLT4) an optical transmission channel (O1, O2, O3, O4) is assigned, **characterized in, that** to each transmission channel (O1, O2, O3, O4) a set of different wavelengths (lambda1, lambda5, lambda9 ...; lambda2, lambda6, lambda10 ...; ...) is assigned, that to each optical receiver (OLT1, OLT2, OLT3, OLT4) a set of optical filters is assigned that pass the wavelengths of one set of wavelengths, and that each optical transmitter (ONU1, ..., ONU5, ONUn) chooses a wavelength from the set of wavelengths assigned to it.

**2.** Method according to claim 1, **characterized in, that** a transmission channel is assigned to several optical transmitters (ONU1, ..., ONU5, ONUn) to be used in a time multiplex manner.

**3.** Optical transmission system (OLT1, OLT2, OLT3, OLT4, Cy-WDM, ONU1, ONU2, ONU3, ONU4, ONU5, ONUn) with an optical transmission line with several transmission channels (O1, O2, O3, O4) for communication of several optical transmitters (ONU1, ..., ONU5, ONUn) with several optical receivers (OLT1, OLT2, OLT3, OLT4) using different wavelengths (lambda1 to lambda20), where to each optical receiver (OLT1, OLT2, OLT3, OLT4) an optical transmission channel (O1, O2, O3, O4) is assigned, **characterized in, that** to each optical receiver (OLT1, OLT2, OLT3, OLT4) a set of optical filters is assigned, that each filter passes one wavelength out of a set of different wavelengths (lambda1, lambda5, lambda9 ...; lambda2, lambda6, lambda10 ...; ...), that each set of optical filters includes filters for other wavelengths than the other sets of optical filters, that the sets of filters are arranged such that the wavelengths of each set of wavelengths are spread over an area of wavelength (lambdal to lambda20) commonly permitted to all sets of wavelengths, and that each optical transmitter (ONU1, ..., ONU5, ONUn) is built such that it chooses a wavelength from the set of wavelengths assigned to it.

**5.** Optical transmitter (ONU1, ..., ONU5, ONUn) for an optical transmission system (OLT1, OLT2, OLT3, OLT4, Cy-WDM, ONU1, ONU2, ONU3, ONU4, ONU5, ONUn) with an optical transmission line with several transmission channels (O1, O2, O3, O4) for communication of several optical transmitters (ONU1, ..., ONU5, ONUn) with several optical receivers (OLT1, OLT2, OLT3, OLT4) using different wavelengths (lambdal to lambda20), where to each optical receiver (OLT1, OLT2, OLT3, OLT4) an optical transmission channel (O1, O2, O3, O4) is assigned, **characterized in, that** the optical transmitter (ONU1, ..., ONU5, ONUn) is built such that it chooses a wavelength from a set of wavelengths (lambda1, lambda5, lambda9 ...; lambda2, lambda6, lambda10 ...; ...) assigned to it.

**6.** Optical filter device (Cy-WDM) with a set of optical filters for passing one wavelength each out of a set of different wavelengths, that is built such that when combined with at least one further set of optical filters for passing one wavelength each out of a set of different wavelengths each set of wavelengths (lambda1, lambda5, lambda9 ...; lambda2, lambda6, lambda10 ...; ...) is spread over an area of wavelength (lambdal to lambda20) commonly permitted to all sets of wavelengths, that complement one another such that they as a whole cover the area of wavelength (lambdal to lambda20) commonly permitted to all sets of wavelengths, **characterized in, that** at least one further such set of optical filters is present and for each set of optical filters an optical combining unit is present, that bundles all wavelengths having passed all filters of this set of optical filters.

**7.** Optical filter device according to claim 6, **characterized in, that** the passband wavelengths of the filters of the sets of optical filters are spaced equally among one another.
